(19)

Europäisches
Patentamt
European
Patent Office
Office européen
des brevets

(11)  **EP 2 824 206 B1**

(12)  **EUROPEAN PATENT SPECIFICATION**

(45) Date of publication and mention
of the grant of the patent:
**27.02.2019 Bulletin 2019/09**

(21) Application number: **13757290.5**

(22) Date of filing: **05.03.2013**

(51) Int Cl.:
*C22C 38/00* (2006.01)    *B32B 15/01* (2006.01)
*C22C 38/44* (2006.01)    *C22C 38/02* (2006.01)
*C22C 38/04* (2006.01)    *C22C 38/42* (2006.01)
*C21D 6/00* (2006.01)

(86) International application number:
**PCT/JP2013/001372**

(87) International publication number:
**WO 2013/132838 (12.09.2013 Gazette 2013/37)**

(54) **USE OF STAINLESS CLAD STEEL**

VERWENDUNG VON ROSTFREIEM PLATTIERTEM STAHL

UTILISATION D'ACIER INOXYDABLE REVÊTU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.03.2012 JP 2012051091**

(43) Date of publication of application:
**14.01.2015 Bulletin 2015/03**

(73) Proprietor: **JFE Steel Corporation
Tokyo 100-0011 (JP)**

(72) Inventors:
• **YAZAWA, Yoshihiro**
**Tokyo 100-0011 (JP)**
• **TACHIBANA, Shunichi**
**Tokyo 100-0011 (JP)**
• **KISHI, Keiichiro**
**Tokyo 100-0011 (JP)**
• **KURONUMA, Yota**
**Tokyo 100-0011 (JP)**
• **HOSHINO, Toshiyuki**
**Tokyo 100-0011 (JP)**

(74) Representative: **Grünecker Patent- und
Rechtsanwälte
PartG mbB
Leopoldstraße 4
80802 München (DE)**

(56) References cited:
**EP-A1- 0 596 121        GB-A- 2 002 397
JP-A- S6 418 502        JP-A- H02 254 121
JP-A- H02 285 025        JP-A- 2002 003 938
JP-A- 2004 137 538        JP-A- 2004 156 126
JP-A- 2004 332 065        JP-A- 2008 274 386
JP-A- 2012 148 502        JP-A- 2012 149 308**

• **CHIH-CHUN HSIEH AND WEITE WU: "Overview
of Intermetallic Sigma Phase Precipitation in
Stainless Steels", ISRN METALLURGY, HINDAWI
PUBLISHING CORPORATION, US, vol. 2012, 1
January 2012 (2012-01-01), pages 732471-1,
XP002734160, ISSN: 2090-8717, DOI:
10.5402/2012/732471**

## Description

[Technical Field]

The present invention relates to the use of a stainless clad steel with excellent corrosion resistance, for various application purposes typified by heat exchangers, chemical tankers, chemical plants, and pressure vessels.

[Background Art]

In recent years, there has been a tendency of the temperature and the pressure of a plant operation to increase from the viewpoint of improvement in efficiency. In the design of a chemical plant, the proportion of use of a steel sheet having a higher sheet thickness tends to increase in order to ensure strength. In addition, needs of industrial facilities and structures are directed toward the durability, an increase in life, and freedom from maintenance, and the stainless steel has become a focus of attention as a material conforming to these needs. Meanwhile, as for alloy elements typified by Ni, Mo, and Cr, which are main raw materials for the stainless steel, there are increases in prices and fluctuations in prices. Consequently, instead of the stainless steel, a stainless clad steel has been noted as a steel product recently, wherein excellent rusting resistance of the stainless steel can be utilized more economically, and the price is stable and low.

The stainless clad steel refers to a steel product in which two types of metals having different properties are bonded together, where a cladding material is a stainless steel and a base material is a carbon steel. The clad steel is produced by metallurgically bonding different types of metals, so that, in contrast to coating, there is no fear of peeling and new characteristics, which are not exhibited by a single metal or an alloy, can be provided.

As for the stainless clad steel, in order to ensure rusting resistance which is a function serving the purpose on a use environment basis, the type of stainless steel serving as a cladding material is selected on a use environment basis and, thereby, the corrosion resistance equivalent to that in the case where the stainless steel is employed throughout the thickness (hereafter may be referred to as "solid material").

As described above, the stainless clad steel has advantages that the compatibility between the economy and the functionality can be ensured because a usage of the stainless steel is reduced and the rusting resistance equivalent to that of a solid material can be ensured. Consequently, it is believed that the stainless clad steel is a very useful functional steel product, and needs for the stainless clad steel have been increased in various industrial fields.

In particular, in many cases, the stainless clad steel is used for application purposes requiring corrosion resistance. Therefore, enhancement in functionality of the surface is an important technical issue. In this regard, in the prior art, a technique in which the corrosion resistance conforming to the requirement is ensured by selecting a stainless steel used as a cladding material is employed in general in order to ensure the corrosion resistance of the stainless clad steel sheet required on an application purpose (for example, heat exchangers, chemical plants, chemical tankers, and pressure vessels, etc.) basis. However, in the case of the stainless clad steel, it is difficult to ensure the compatibility between improvement in the soundness and the reliability of bonding interface and the performances of the base material and the cladding material with respect to all high grade steel products and the variety of types.

It is not said that the above-described technology to improve the function, e.g., corrosion resistance, by appropriately controlling the surface quality has been studied sufficiently in the same component system.

Examples of technologies to improve the corrosion resistance of the stainless clad steel include Patent Literatures 1 to 4.

Patent Literature 1 discloses a method in which, in a method for manufacturing a stainless clad steel pipe by employing a stainless steel with excellent corrosion resistance in sea water as a cladding material and carbon steel as a base material, the solid solution heat treatment condition is specified and the components of the base material carbon steel are specified to be within appropriate component ranges to recover degradation in the corrosion resistance of a seam weld zone. However, this method is a technology to prevent precipitation of a second phase that degrades the corrosion resistance, and study on the surface quality of the stainless steel is not performed. That is, the surface quality, e.g., a Cr concentration ratio in a passivation film and the glossiness of the surface, has not been studied. Therefore, a dramatic improvement in the corrosion resistance is not expected.

Patent Literature 2 discloses a thin stainless clad steel sheet by employing an austenite stainless steel as a cladding material and a low-carbon steel as a base material among thin stainless clad steel sheets suitable for raw materials to be subjected to working, e.g., deep drawing, punch stretching, and bending. It is disclosed that the low-carbon steel serving as the base material contains C: 0.015 to 0.06 percent by weight, N: 0.010 percent by weight or less, Ti: 0.10 to 0.40 percent by weight, and B: 0.0005 to 0.0050 percent by weight and has a component composition satisfying $(Ti - 3.4N)/4C \geq 0.6$ and $Ti \times C = 2.8 \times (1/103)$ to $13.5 \times (1/103)$ (where Ti: Ti content (percent by weight), N: N content (percent by weight), and C: C content (percent by weight)) and, thereby, even in the case where high-temperature annealing is performed to subject to high deformation, base material crystal grains do not become coarse, surface roughness, e.g., orange peel, does not occur, and excellent surface quality is exhibited. However, Patent Literature 2 does not disclose a technology to improve the corrosion resistance, although a technology to reduce uneven shapes of the steel sheet surface in working is disclosed.

Patent Literature 3 discloses an austenite stainless clad steel sheet used in fields, e.g., line pipes used in a sour gas environment, tanks in chemical tankers, and absorption containers for flue gas desulfurization apparatuses, in which high corrosion resistance is required and a manufacturing method, e.g., a heat treatment condition, thereof.

However, Patent Literature 3 discloses only the technology to ensure the steel sheet corrosion resistance basically by specifying the types of alloy components and adjusting the content, and a relationship with the technology related to the surface quality has not been studied.

Patent Literature 4 discloses a super stainless/stainless clad steel sheet formed from a composite metal sheet with excellent corrosion resistance and formability. In this clad steel sheet, a super stainless steel containing Ni, Cr, Mo, and N and having a composition satisfying the condition of $(Cr + 2 \times Mo + 9 \times N) \geq 27\%$ (percent by weight), $16\% \leq Ni \leq 30\%$, $18\% \leq Cr \leq 30\%$, $7\% < Mo \leq 8\%$, and $0.10\% \leq N$ is employed as a cladding material on both surfaces or one surface of the stainless steel and the interface between the super stainless steel and the stainless steel is metallurgically bonded. However, in Patent Literature 4 as well, the corrosion resistance is enhanced by alloy elements and, therefore, it is difficult to improve the characteristics without increasing the amount of addition of the alloy elements.

As described above, almost all technologies improve the corrosion resistance of the stainless clad steel by heat treatment methods or adjustment of alloy elements and the technology to improve the corrosion resistance by controlling the surface quality of a final product has not been studied sufficiently.

Patent Literature 5 discloses austenitic stainless steel with high corrosion resistance and favourable hot and cold space workability used as building material in seaside environments.

Patent Literature 6 discloses a method for forming stainless steel passivated films with a Cr/Fe ratio of not less than 1.

Patent Literature 7 discloses a method for manufacturing a clad steel sheet with high sea water corrosion resistance.

Patent Literature 8 discloses a method for manufacturing a clad steel sheet with high corrosion resistance.

Patent Literature 9 discloses a a method for manufacturing a stainless steel plate with high weather resistance used for building materials, cladding, and surface-layer material, by polishing and heat processing the steel material.

Patent Literature 10 discloses a surface treatment method for stainless steel which can improve the corrosion resistance by electrolytically polishing the surface.

[Citation List]

[Patent Literature]

[PTL 1] Japanese Patent No. 4179133
[PTL 2] Japanese Patent No. 3409660
[PTL 3] Japanese Patent No. 3514889
[PTL 4] Japanese Patent No. 3401538
[PTL 5] JP 2004156126 A
[PTL 6] EP 0596121 A1
[PTL 7] JP H02285025 A
[PTL 8] JP S6418502 A
[PTL 9] JP 2002003938 A
[PTL 10] JP 2008274386 A

[Summary of Invention]

[Technical Problem]

In consideration of such circumstances, the present disclosure provides a stainless clad steel which is excellent in corrosion resistance, in particular, rusting resistance and an improvement in appearance due to prevention of discoloration and which can prevent an occurrence of outflow rust.

[Solution to Problem]

In order to solve the above-described problems, the present inventors subjected stainless clad steel sheets by using stainless steels which had the same components (steel composition), which had the same history of completion of rolling to a heat treatment, and which had Pitting Index of 35 or more to various mirror finish treatments and performed studies on the surface quality in detail. The Pitting Index is represented by (Cr + 3.3Mo + 16N), where each symbol of element indicates the content on a percent by mass basis of the element concerned. In the present invention, the stainless steel is a generic name for the steel product which is a Fe-Cr or Fe-Cr-Ni alloy steel having the corrosion resistance in such a way as to become applicable to uses in need of the corrosion resistance in sea water and which is characterized by containing Cr at a high content (for example, 20% or more) and Mo (for example, 2% or more), wherein a σ phase (intermetallic compound) is precipitated in a manufacturing process.

The present inventors noted the surface glossiness and anisotropy thereof, the strength of passivation film having an influence on the corrosion resistance, especially pitting resistance of the stainless steel, the Cr/Fe ratio, and the like and performed studies. As a result, it was found that the rusting resistance was improved considerably by specifying the ratio of Cr concentration (atomic percent)/Fe concentration (atomic percent) in the passivation film portion to Cr concentration (atomic percent)/Fe concentration (atomic percent) in the stainless steel serving as a parent phase portion to be 1.20 or more and an average glossiness indicator of 60-degree specular glossiness; Gs(60°) in a rolling direction (L), that in a perpendicular direction (C), and that in a direction at an angle of 45 degrees with respect to the rolling direction (D) measured by JIS Z 8741 (1997) "Specular glossiness-methods of measurement" of the above-described stainless clad steel surface to be 60 or more.

The present invention has been made on the basis of the above-described findings and is defined by the appended claims.

[Advantageous Effects of Invention]

According to the present disclosure, a stainless clad steel with improved corrosion resistance, in particular, rusting resistance can be provided, wherein an appearance is improved because of prevention of discoloration of the surface and outflow rust can be improved.

In particular, a stainless clad steel with excellent appearance due to corrosion resistance, especially prevention of outflow rust, is favorably used for various application purposes typified by heat exchangers, chemical tankers, chemical plants, and pressure vessels.

[Brief Description of Drawings]

Fig. 1 is a diagram showing measurement examples of the Cr concentrations (atomic percent) and the Fe concentrations (atomic percent) of a passivation film and a stainless steel parent phase portion.
Fig. 2 is a diagram showing the measurement condition of the surface glossiness.

[Description of Embodiments]

The configuration of the present invention will be described.

(1) Initially, the stainless clad steel used according to the present invention is a stainless clad steel by using a stainless steel having Pitting Index represented by Formula (1) described below of 35 or more as a cladding material.

$$\text{Pitting Index} = (\text{Cr} + 3.3\text{Mo} + 16\text{N}) \quad \cdots \text{Formula (1)}$$

Here, in Formula (1), Cr, Mo, and N indicate the contents (percent by mass) of their respective elements, and the case of no inclusion is specified to be 0.

In this regard, as for the stainless steel serving as the cladding material, Pitting Index (Cr + 3.3Mo + 16N) ≥ 35 is selected because in the case where uses in need of the corrosion resistance (in particular, crevice corrosion resistance) are considered among various application purposes typified by heat exchangers, chemical tankers, chemical plants, and pressure vessels, it is believed to be necessary to contain much Cr and Mo effective for preventing occurrence and growth of pitting and have Pitting Index serving as an indicator of pitting resistance of 35 or more. In this regard, the relationship between Pitting Index and CPT (Critical Pitting Temperature (ASTM G48-03 Method E)) or CCT (Critical Crevice Temperature (ASTM G48-03 Method D)) is a positive interrelation.

(2) Next, the amount of precipitation of a σ (sigma) phase of the surface of the cladding material is 2.0% or less on an area ratio basis.

As described above, a high-alloy stainless clad steel which can improve an appearance because of the corrosion resistance, in particular, rusting resistance, and prevention of discoloration of the surface and which can improve outflow rust is obtained by controlling the surface quality and, in addition, specifying precipitation of the σ phase in the steel to be 2.0% or less.

It was ascertained that a σ phase precipitated in the steel containing Mo, according to the present invention, was an intermetallic compound containing FeCrMo by identifying a residue extracted by a Speed method in a 10% acetylacetone-1% tetramethylammonium mixed electrolytic solution (commonly called AA solution) on the basis of X-ray diffraction

If the σ phase is precipitated, Cr and Mo in the steel are reduced. It is preferable that the amount of precipitation of σ phase be minimized because Cr and Mo in the steel are alloy elements effective in improving the corrosion resistance.

Meanwhile, in many cases, a heat treatment (Q-T treatment) is performed in consideration of a production process of a clad steel and strength-toughness of a base material. In that case, precipitation of a σ phase in the heat treatment and a cooling process thereof is not avoided depending on the heat treatment and cooling conditions. In addition, in hot rolling and a cooling process thereof as well, precipitation of a σ phase may occur so as to cause significant degradation in corrosion resistance.

The relationship between the amount of precipitation of the σ phase and the corrosion resistance of the stainless steel (cladding material) surface was examined. As a result, it was found that when the amount of precipitation of the σ phase was more than 2.0%, the corrosion resistance was degraded significantly and an occurrence of rusting of the surface was conspicuous. The reason for this is believed to be that if the amount of precipitation of the σ phase is more than 2.0%, σ phases precipitated at grain boundaries are joined and cover the grain boundaries and, thereby, corrosion is conspicuous.

(3) The ratio of Cr concentration (atomic percent)/Fe concentration (atomic percent) in a passivation film portion of the cladding material to Cr concentration (atomic percent)/Fe concentration (atomic percent) of a parent phase portion of the above-described cladding material is 1.20 or more.

The Cr concentration (atomic percent)/Fe concentration (atomic percent) in the passivation film portion of the cladding material is very important factor in an improvement of pitting resistance. As the ratio ($I_1/I_2$, hereafter abbreviated as Cr/Fe concentration ratio) of Cr concentration (atomic percent)/Fe concentration (atomic percent); $I_1$ in the passivation film portion of the stainless steel serving as the cladding material to Cr concentration (atomic percent)/Fe concentration (atomic percent); $I_2$ in a parent phase portion becomes high, a stable passivation film with excellent pitting resistance is disposed as the surface layer. Therefore, a higher Cr/Fe concentration ratio is better from the viewpoint of the corrosion resistance. According to studies, it was found that the Cr/Fe concentration ratio of 1.20 or more was necessary to exert a corrosion resistance (pitting resistance) improving effect clearly on the basis of an atmospheric corrosion test or an accelerated corrosion test as compared with an abrasive. The Cr/Fe concentration ratio is specified to be 1.20 or more on the basis of this finding. Preferably, the Cr/Fe concentration ratio is 1.50 or more.

On the other hand, in order to increase the Cr/Fe concentration ratio to a great extent, acid dipping, pickling, or an electrolytic treatment is necessary. The stainless clad steel sheet is a clad steel sheet of a carbon steel and a stainless steel. Therefore, in the case of a dipping treatment in a predetermined solution, it is necessary to make considerations in such a way that the common steel is not dissolved, and an application of a load is necessary to improve the degree of concentration of Cr in the surface layer to higher than or equal to that of a solid material (stainless steel). As described above, an equipment load is required for an excessive improvement in the Cr/Fe concentration ratio. Therefore, preferable upper limit is 5.0 or less.

In this regard, an improvement in the Cr/Fe concentration ratio is not expected by only mechanical polishing, so that it is important to combine with some chemical surface control technique. The surface-controlling technique can be a combination of various known surface-polishing techniques, e.g., common belt polishing, grinder polishing, abrasive wheel polishing, electrolytic polishing, and a pickling treatment. The surface roughness and the anisotropy thereof are controlled at low levels by combining the above-described techniques and, in addition, the passivation film is strengthened, so that desired characteristics are obtained. Examples of methods for strengthening the passivation film of the surface include a technique by using a pickling treatment with nitric acid or fluoro-nitric acid or electrolytic polishing. It is also possible to combine these methods with an electrolytic neutral pickling treatment in a neutral salt solution (for example, Ruther process: 20% sodium sulfate solution and sodium nitrate).

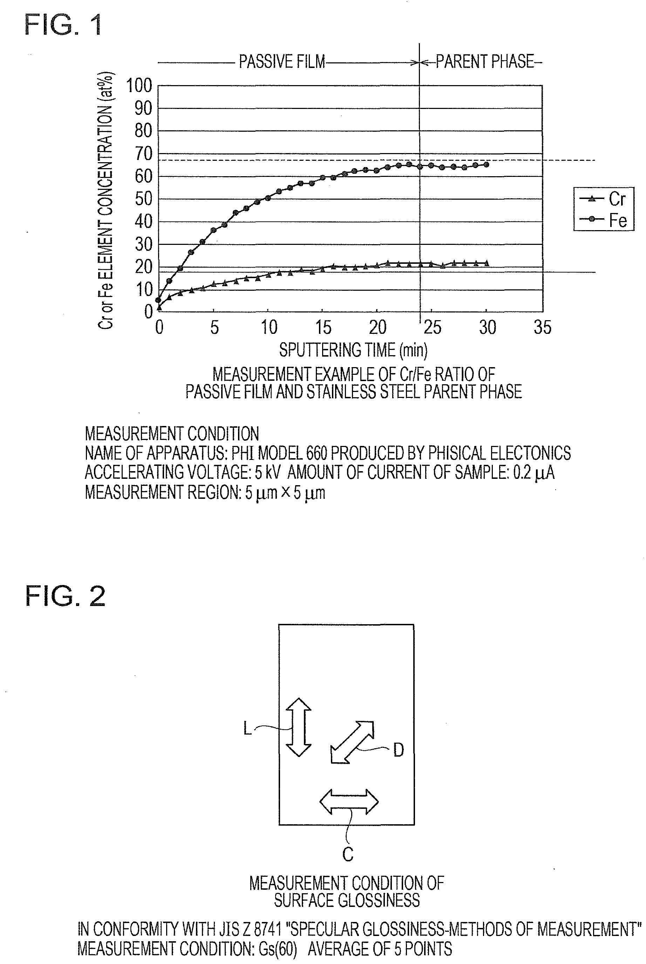

Meanwhile, as for the Cr/Fe concentration ratio in the present invention, the Cr/Fe concentration ratio can be determined by, for example, measuring the concentration profile (atomic percent) of an element while the steel surface is sputtered in the depth direction and determining an atomic ratio of Cr to Fe from the individual element (Fe, Cr, and the like) concentration profiles. In this case, as shown in Fig. 1, a region in which the values (atomic percent) of Cr and Fe are almost constant values is assumed to be a parent phase portion, and a region with a sputtering time shorter than that is defined as a passivation film portion. As for the passivation film portion, the value at the site exhibiting a highest Cr/Fe value is defined as the Cr concentration (atomic percent)/Fe concentration (atomic percent) in the passivation film portion.

(4) Next, it is preferable that the average glossiness indicator Gs(60) calculated by Formula (2) described below be 60 or more, where the specular glossiness at a measurement angle of 60° defined in JIS Z 8741 (1997) (Specular glossiness-methods of measurement) is measured in a rolling direction ($Gs(60)_L$), in a direction perpendicular to the rolling direction ($Gs(60)_C$), and in a direction at an angle of 45 degrees with respect to the rolling direction ($Gs(60)_D$).

$$Gs(60) = (Gs(60)_L + 2 \times Gs(60)_D + Gs(60)_C)/4 \cdots Formula\ (2)$$

It is more preferable that the average glossiness indicators $Gs(60)_L$, $Gs(60)_C$, $Gs(60)_D$ and $Gs(60)$ are 60 or more, where the specular glossiness at a measurement angle of 60° defined in JIS Z 8741.

The surface glossiness is an indicator showing fine unevenness of the surface and is an evaluation indicator of the surface quality. Fine surface roughness evaluated by the surface glossiness influences not only the indicator of appearance of the stainless clad steel, but also degradation in pitting resistance and the form of outflow rust to a great extent.

Then, in the present invention, it was believed that the metal glossiness well reflected the surface roughness, that is, characteristics of micro-unevenness of the surface and the surface roughness was noted. As for a surface material with high glossiness and less anisotropy, soiling does not occur easily, an occurrence of crevice corrosion is prevented, and the form of rust tends to become spot rust rather than outflow rust because of less anisotropy. In addition, even when rusting occurs once, there is a high possibility of being washed away by rainwater. Furthermore, there is an advantage that maintenance is easy because fine unevenness is reduced and the surface is smooth.

As described above, it is believed that surface fine unevenness has a large influence on the rusting resistance of the stainless clad steel. For example, in the case of use in seawater, as unevenness increases, seawater, marine microbes, and contaminants in the ocean adhere to the surface easily. Consequently, micro gaps are formed resulting from them, and crevice corrosion occurs easily.

Moreover, in the case where the glossiness has anisotropy, solution components tend to remain in a specific direction, so that discoloration and rusting are induced especially at a gas-liquid interface. Also, color tones are different and, therefore, there is a limit in practical use, that is, when the clad steel is used, it is necessary to apply in consideration of, for example, the direction of taking of the sheet.

Then, intensive research has been performed on the relationship between the surface glossiness and the corrosion resistance on the basis of those described above. As a result, it was found that the corrosion resistance was improved when the average glossiness indicator (Gs(60)) calculated by Formula (2) described above was 60 or more, where the glossiness (Gs(60)) defined in JIS Z 8741 "Specular glossiness-methods of measurement" was measured in a rolling direction (L), in a perpendicular direction (C), and in a direction at an angle of 45 degrees with respect to the rolling direction (D).

Preferably, the glossiness (Gs(60)) is higher. However, polishing of the stainless steel to increase the glossiness requires a significant load. Consequently, in consideration of the production load, the upper value of Gs(60) measured in the individual directions of the rolling direction (L), the perpendicular direction (C), and the direction at an angle of 45 degrees with respect to the rolling direction (D) is 300, and preferably 150 or less.

Meanwhile, as for each glossiness and the average glossiness indicator in the present invention, the surface glossiness can be measured on the basis of JIS Z 8741 "Specular glossiness-methods of measurement" by using a multi-angle gloss meter under the condition shown in Fig. 2. Gs(60) can be derived by an average of five points.

(5) In this connection, as for the stainless clad steel used according to the present invention, any of a hot-rolled steel sheet and a steel sheet subjected to an annealing heat treatment after a hot-rolling treatment is included, and the same effect is obtained.

Also, the surface quality is controlled and the surface characteristics are allowed to fall within predetermined ranges by combining chemical treatments in addition to mechanical polishing. That is, surface-controlling technique can be a combination of various known surface-polishing techniques, e.g., common belt polishing, grinder polishing, abrasive wheel polishing, electrolytic polishing, and a pickling treatment. The surface roughness and the anisotropy thereof are controlled at low levels by combining the above-described techniques and, in addition, the passivation film is strengthened, so that desired characteristics are obtained. Examples of methods for strengthening the passivation film of the surface include a technique by using a pickling treatment with nitric acid or fluoro-nitric acid or electrolytic polishing. It is also possible to combine these methods with an electrolytic neutral pickling treatment in a neutral salt solution (for example, Ruther process: 20% sodium sulfate solution and sodium nitrate).

(6) Meanwhile, a carbon steel and a low-alloy steel can be used as the base material of the stainless clad steel used according to the present invention. Then, in the stainless clad steel according to the present invention, one surface or both surfaces of this base material is clad with stainless steel serving as a cladding material, and the method for cladding the base material with the cladding material is not specifically limited. A hot-rolling method, an explosive rolling method, a diffusion bonding method, a cast-in insert method, and the like can be used.

(7) Also, an annealing treatment to hold at a temperature of 700°C to 1,000°C for 1 minute to 2 hours can also be performed. In the case where Cr and Mo contents contained in stainless steel used as a cladding material of a stainless clad steel are large, for example, in the case of high-alloy steel having a Cr content of 20% or more and containing 2% or more of Mo, a $\sigma$ (sigma) phase, a $\chi$ (chi) phase, and furthermore, $M_{23}C_6$, $M_6C$ (primary components of M are Fe, Cr), and the like are generated, so that effective Cr may be reduced and considerable degradation in corrosion resistance may be caused by sensitization. In such a case, the stainless clad steel with a controlled surface, used according to the present invention, is effective and can contribute to removal of a Cr-removing layer and putting of a sensitized portion into a sound basis.

[Examples]

The present invention will be described below in detail. Each of molten steels of two types of high-alloy stainless steel having chemical compositions shown in Table 1 and exhibiting Pitting Index (Cr + 3.3Mo + 16N) $\geq$ 35 and a common structural steel (equivalent to EH36) was refined by known methods, e.g., a converter, an electric furnace, and a vacuum melting furnace, and was made into a steel (slab) by a continuous casting method or an ingot making-slabbing method. Subsequently, the resulting steel was treated sequentially through hot rolling, hot-rolled sheet annealing (for example, box annealing), and pickling, so as to produce a hot-rolled sheet. In addition, cold rolling and finish annealing (for example, continuous annealing) were performed, so as to produce a cold-rolled annealed sheet. The resulting cold-rolled annealed sheet was used as a cladding material (austenite stainless steel) and a base material of a clad and a stainless clad steel was produced under the production condition shown in Table 2.

That is, the cladding material (austenite stainless steel, sheet thickness 20 mm) and the base material (common structural steel: steel equivalent to EH36) shown in Table 1 were made into an assembled slab dimension 1,890 mm wide by 2,060 mm long, and a stainless clad steel (cladding material: sheet thickness 4.0 mm, base material: sheet thickness 14.0 mm, width 2,500 mm, length 8,000 mm) was produced under the condition of slab heating temperature (°C): 1,150°C to 1,250°C, finish rolling temperature (°C): 1,000°C $\pm$ 50°C, water cooling start temperature (°C): 950°C $\pm$ 50°C, water cooling finish temperature (°C): 650°C $\pm$ 50°C, and cooling rate (°C/s): 0.2°C/s to 7.0°C/s. In addition, part of the stainless clad steel was subjected to an annealing heat treatment at 910°C $\pm$ 20°C for 10 minutes or 2 hours, as shown in Table 3.

[Table 1]

Table 1 (percent by mass)

| Cladding material | C | Si | Mn | P | S | Cr | Ni | Mo | Cu | N | Pitting Index | Remarks |
|---|---|---|---|---|---|---|---|---|---|---|---|---|
| Cladding material 1 (SUS) | 0.016 | 0.23 | 0.53 | 0.026 | 0.002 | 24.1 | 23.1 | 4.22 | 0.05 | 0.18 | 40.90 | Austenitic Stainless Steel |
| Cladding material 2 (SUS) | 0.015 | 0.41 | 0.61 | 0.021 | 0.004 | 20.3 | 18.5 | 6.62 | 0.75 | 0.20 | 45.35 | Austenitic Stainless Steel |
| Base material (mild steel) | 0.12 | 0.35 | 1.55 | 0.013 | 0.003 | 0.02 | 0.37 | 0.001 | 0.31 | 0.09 | - | EH36 |

[Table 2]

Table 2

| Assembled slab dimension (mm) | Slab heating temperature (°C) | Finish rolling temperature (°C) | Water cooling start temperature (°C) | Water cooling finish temperature (°C) | Cooling rate (°C/s) | Product dimension (mm) |
|---|---|---|---|---|---|---|
| Stainless steel (cladding material) thickness: 20 Steel (base material) thickness: 73 width: 1890 length: 2060 | 1150~1250°C | 1000±50 | 950±50 | 650±50 | 0.2~7.0 | Stainless steel (cladding material) thickness: 4.0 Steel (base material) thickness: 14.0 width: 2500 length: 8000 |

[Table 3]

Table 3

| Production condition | Cooling rate (°C/s) | Annealing heat treatment condition |
|---|---|---|
| Conition 1 | 0.3 | none |
| Conition 2 | 1.0 | none |
| Conition 3 | 7.0 | none |
| Conition 4 | 0.3 | 910±20°C-10min |
| Conition 5 | 0.3 | 910±20°C-120min |

The stainless clad steel obtained as described above was subjected to a combination of various known surface polishing techniques, e.g., common belt polishing, grinder polishing, abrasive wheel polishing, electrolytic polishing, and a pickling treatment, so that the surface roughness and the anisotropy thereof were controlled at low levels. Furthermore, in addition to them, a pickling treatment with nitric acid, fluoro-nitric acid, or sulfuric acid or electrolytic polishing was performed for the purpose of strengthening the passivation film of the surface, so that desired characteristics were obtained.

The steel sheet with controlled surface quality was subjected to measurements of the Cr/Fe concentration ratio, the glossiness, and the pitting potential, a CCT test was performed, and the corrosion resistance was evaluated. The results obtained as described above are shown in Tables 4 and 5. Underlined values on Surface layer σ phase area ratio column and on Cr/Fe concentration ratio in passive film portion and on parent phase portion column show Comparative examples of Claim 1. Underlined values on Average Gs(60) column show Comparative examples of Claim 2. On Surface treatment cost column, 'X' indicates Surface treatment cost is more than 2.0 times, 'Δ' indicates Surface treatment cost is more than 1.5 times and 2.0 times or less, and '○' indicates Surface treatment cost is less than 1.5 times, compared to Steel No. 1 of Table 4.

[Table 4]

Table 4 Test results

| No. | Cladding material | Production condition | Gs (60)$_L$ | Gs (60)$_D$ | Gs (60)$_C$ | Average Gs(60) | Cr/Fe concentration ratio in passive film portion and parent phase portion (relative value based on AES analysis)* | Surface layer σ phase area ratio (%) | Pitting potential measurement 70°C (V'$_{C100}$ mV vs SCE) | CPT test evaluation (A STM G48-03 Method E) | Surface treatment cost | Remarks |
|---|---|---|---|---|---|---|---|---|---|---|---|---|
| 1 | 1 | Condition 3 | 59.3 | 48.6 | 29.6 | 46.5 | 0.99 | <1.0 | 100 | X | ○ | Comparative example |
| 2 | 1 | Condition 3 | 88.3 | 50.3 | 39.1 | 57.0 | 1.05 | <1.0 | 109 | X | ○ | Comparative example |
| 3 | 1 | Condition 3 | 70.0 | 50.3 | 55.0 | 56.4 | 1.80 | <1.0 | 305 | ○ | ○ | Invention example |
| 4 | 1 | Condition 3 | 63.4 | 59.0 | 68.3 | 62.4 | 1.44 | ≦2.0 | 300 | ○ | ○ | Invention example |
| 5 | 1 | Condition 3 | 19.8 | 16.3 | 28.0 | 20.1 | 0.99 | <1.0 | 115 | X | ○ | Comparative example |
| 6 | 1 | Condition 3 | 88.2 | 96.0 | 88.1 | 92.1 | 0.99 | <1.0 | 133 | X | ○ | Comparative example |
| 7 | 1 | Condition 3 | 169.0 | 128.4 | 133.4 | 139.8 | 1.03 | <1.0 | 240 | X | ○ | Comparative example |
| 8 | 1 | Condition 3 | 150.3 | 100.9 | 88.1 | 110,1 | 2.01 | <1.0 | 489 | ○ | ○ | Invention example |
| 9 | 1 | Condition 3 | 156.0 | 184.1 | 122.9 | 161.8 | 6.03 | <1.0 | 690 | ○ | Δ | Invention example |
| 10 | 1 | Condition 3 | 220.1 | 155.3 | 180.0 | 177.7 | 1.35 | <1.0 | 306 | ○ | Δ | Invention example |
| 11 | 1 | Condition 3 | 251.0 | 200.3 | 221.0 | 218.2 | 1.45 | <1.0 | 336 | ○ | X | Invention example |
| 12 | 1 | Condition 3 | 251.0 | 200.3 | 221.0 | 218.2 | 0.98 | <1.0 | 183 | X | X | Comparative example |

| No. | Cladding material | Production condition | Gs $(60)_L$ | Gs $(60)_D$ | Gs $(60)_C$ | Average Gs(60) | Cr/Fe concentration ratio in passive film portion and parent phase portion (relative value based on AES analysis)* | Surface layer σ phase area ratio (%) | Pitting potential measurement 70°C (V'$_{C100}$ mV vs SCE) | CPT test evaluation (A STM G48-03 Method E) | Surface treatment cost | Remarks |
|---|---|---|---|---|---|---|---|---|---|---|---|---|
| 13 | 1 | Condition 1 | 120.0 | 55.0 | 111.3 | 85.3 | 1.21 | 0 | 305 | ○ | ○ | Invention example |
| 14 | 1 | Condition 1 | 140.3 | 59.0 | 111.3 | 92.4 | 1.10 | 3.2 | 180 | X | ○ | Comparative example |
| 15 | 1 | Condition 2 | 111.3 | 153.2 | 96.0 | 128.4 | 1.55 | <1.0 | 320 | ○ | ○ | Invention example |
| 16 | 1 | Condition 3 | 180.3 | 140.3 | 100.9 | 140.5 | 1.22 | <1.0 | 420 | ○ | ○ | Invention example |
| 17 | 1 | Condition 4 | 180.3 | 112.6 | 100.9 | 126.6 | 0.99 | 8.2 | 112 | X | ○ | Comparative example |

Underlined values are Comparative examples.

[Table 5]

[Table 5]

Table 5 Test results

| No. | Cladding material | Production condition | GS (60)$_L$ | Gs (60)$_D$ | Gs (60)$_C$ | Average Gs(60) | Cr/Fe concentration ratio in passive film portion and parent phase portion (relative value based on AES | Surface layer σ phase area ratio (%) | Pitting potential measurement 70°C (V'$_{C100}$ mV vs SCE) | CPT test evaluation (A STM G48-03 Method E) | Surface treatment cost | Remarks |
|---|---|---|---|---|---|---|---|---|---|---|---|---|
| 18 | 1 | Condition 5 | 154.6 | 100.9 | 1000.0 | 339.1 | 0.92 | 12.6 | 77 | X | X | Comparative example |
| 19 | 1 | Condition 1 | 129.3 | 115.6 | 100.6 | 115.3 | 1.51 | 3.4 | 220 | X | ○ | Comparative example |
| 20 | 1 | Condition 2 | 150.0 | 112.3 | 100.8 | 118.9 | 2.11 | <1.0 | 342 | ○ | ○ | Invention example |
| 21 | 1 | Condition 3 | 135.3 | 136.5 | 150.3 | 139.7 | 1.89 | <1.0 | 500 | ○ | ○ | Invention example |
| 22 | 1 | Condition 4 | 115.6 | 113.6 | 115.9 | 114.7 | 1.44 | 8.8 | 129 | X | ○ | Comparative example |
| 23 | 1 | Condition 5 | 123.6 | 106.6 | 109.6 | 111.6 | 2.50 | 14.3 | 99 | X | Δ | Comparative example |
| 24 | 2 | Condition 1 | 100.3 | 98.6 | 126.0 | 105.9 | 1.65 | 5.5 | 130 | X | ○ | Comparative example |
| 25 | 2 | Condition 2 | 145.3 | 103.6 | 125.3 | 119.5 | 1.66 | 2.1 | 255 | X | ○ | Comparative example |
| 26 | 2 | Condition 3 | 136.3 | 126.3 | 140.6 | 132.4 | 2.31 | <1.0 | 390 | ○ | Δ | Invention example |
| 27 | 2 | Condition 4 | 121.3 | 123.6 | 100.9 | 117.4 | 1.89 | 12.6 | 65 | X | ○ | Comparative example |
| 28 | 2 | Condition 5 | 116.3 | 123.3 | 115.6 | 119.6 | 1.55 | 19.3 | 28 | X | ○ | Comparative example |
| Underlined values are Comparative examples. | | | | | | | | | | | | |

In this regard, methods for measuring the Cr/Fe concentration ratio, the glossiness, and the pitting potential, a CCT test method, and a corrosion resistance evaluation method are as described below.

Cr/Fe concentration ratio

The atomic ratio (atomic percent) of each element (Fe, Cr) was determined from each element profile measured by using AES (Auger Electron Spectroscopy) (name of apparatus: PHI MODEL 660 produced by PHISICAL ELECTONICS accelerating voltage: 5 kV amount of current of sample: 0.2 μA measurement region: 5 μm × 5 μm) while sputtering was performed in the depth direction. Table 6 shows the numerical values of measurement results.

Table 6 shows an example of Cr/Fe distribution in the depth direction. Cr/Fe ratio in a passivation file varies by a circumstance and a corrosion resistance is improved by a concentration of Cr in the passivation film. A is defined Cr/Fe ratio in a parent stainless steel and B is defined Cr/ Fe ratio in a passivation file. Values of B/A are listed in a column of Ratio of Cr/Fe relative to parent phase. The higher B/A, the more excellent corrosion resistance can be obtained for increased Cr concentration.

Fig. 1 shows the relationship between the measurement time and the values of Cr and Fe. In Table 6, "Ratio of Cr/Fe relative to parent phase" refers to a ratio of Cr/Fe measured with respect to time of sputtering from the surface layer to the Cr/Fe atomic ratio (here 0.33) in the parent phase. In this connection, as shown in Fig. 1, a region in which the values of Cr and Fe were almost constant values was specified to be a parent phase portion, and a region with a sputtering time shorter than that was defined as a passivation film portion. In the passivation film portion, the value at the site exhibiting a highest Cr/Fe value was defined as the Cr/Fe concentration and was compared with the Cr/Fe concentration in the parent phase portion.

[Table 6]

Table 6

| Sputtering time (min) | Cr | Fe | Cr/Fe | Ratio of Cr/Fe relative to parent phase |
|---|---|---|---|---|
| 0 | 2 | 5 | 0.40 | 1.21 |
| 1 | 6 | 13 | 0.48 | 1.44 |
| 2 | 8 | 19 | 0.45 | 1.35 |
| 3 | 10 | 26 | 0.38 | 1.14 |
| 4 | 11 | 31 | 0.35 | 1.06 |
| 5 | 12 | 36 | 0.35 | 1.05 |
| 6 | 13 | 39 | 0.33 | 1.01 |
| 7 | 14 | 44 | 0.32 | 0.97 |
| 8 | 15 | 45 | 0.33 | 1.00 |
| 9 | 15 | 48 | 0.31 | 0.94 |
| 10 | 16 | 50 | 0.33 | 0.99 |
| 11 | 17 | 53 | 0.33 | 0.99 |
| 12 | 17 | 55 | 0.32 | 0.97 |
| 13 | 18 | 57 | 0.32 | 0.97 |
| 14 | 18 | 57 | 0.32 | 0.96 |
| 15 | 19 | 59 | 0.32 | 0.98 |
| 16 | 20 | 59 | 0.33 | 1.01 |
| 17 | 20 | 61 | 0.32 | 0.97 |
| 18 | 20 | 62 | 0.32 | 0.97 |
| 19 | 20 | 63 | 0.32 | 0.97 |

(continued)

| Sputtering time (min) | Cr | Fe | Cr/Fe | Ratio of Cr/Fe relative to parent phase |
|---|---|---|---|---|
| 20 | 21 | 62 | 0.33 | 1.00 |
| 21 | 21 | 63 | 0.34 | 1.02 |
| 22 | 21 | 64 | 0.32 | 0.97 |
| 23 | 21 | 65 | 0.32 | 0.98 |
| 24 | 21 | 64 | 0.33 | 1.01 |
| 25 | 21 | 64 | 0.32 | 0.98 |
| 26 | 20 | 63 | 0.32 | 0.98 |
| 27 | 21 | 64 | 0.33 | 1.01 |
| 28 | 21 | 63 | 0.33 | 1.01 |
| 29 | 21 | 64 | 0.33 | 1.00 |
| 30 | 21 | 65 | 0.33 | 1.00 |

Glossiness

The surface glossiness was measured in conformity with JIS Z 8741 (1997)"Specular glossiness-methods of measurement" by using a multi-angle gloss meter GS series GS-1K produced by Suga Test Instruments Co., Ltd., at an angle of 60 degrees. Measurements were performed in three directions of the rolling direction (L), the perpendicular direction (C), and the direction at an angle of 45 degrees with respect to the rolling direction (D), the average glossiness indicator was determined on the basis of Formula (2) described below, and the resulting average glossiness indicator was specified to be the anisotropy of the surface glossiness.

$$\text{average Gs}(60) = (\text{Gs}(60)_L + 2 \times \text{Gs}(60)_D + \text{Gs}(60)_C)/4$$

$$\cdots \text{Formula (2)}$$

In this regard, average Gs(60) represents average glossiness indicator, $\text{Gs}(60)_L$ represents glossiness in the rolling direction (L), $\text{Gs}(60)_C$ represents glossiness in the perpendicular direction (C), and $\text{Gs}(60)_D$ represents glossiness in the direction at an angle of 45 degrees with respect to the rolling direction (D).

Pitting potential (V'c100)

As for the indicator of the corrosion resistance in a salt damage environment, a pitting potential measurement was performed, where the measurement temperature was specified to be 70°C and other measurement conditions were in conformity with JIS G 0577. The potential when the current density reached 100 $\mu$A/cm$^2$ was specified to be the pitting potential and was expressed in V'c100 (mV vs. SCE). The case where this pitting potential was 300 mV or more, the corrosion resistance was evaluated as good.

CPT (Critical Pitting Temperature)

In order to evaluate the pitting resistance, a sample 30 mm w by 50 mm 1 was subjected to the CPT test in conformity with ASTM G48-03 Method E, and the corrosion resistance was evaluated. Here, CPT refers to a critical pitting corrosion occurrence temperature and the threshold value of evaluation was specified to be 40°C.
That is, a symbol '○' indicates CPT of 40°C or higher (acceptable) and a symbol 'X' indicates CPT of lower than 40°C (unacceptable).

Area ratio of amount of precipitation of σ phase of surface

Structure of the surface was observed and the σ phase area ratio was determined by image processing. In this regard, a sample subjected to 40% NaOH electrolytic etching was used for the structure observation.

As is clear from Tables 4 and 5, in Invention examples, stainless clad steels which have high pitting potentials, which are excellent in CPT evaluation, and which are excellent in rusting resistance are obtained.

Meanwhile, in Comparative examples, the pitting potential is low or at least one of CPT evaluation is inferior.

## Claims

1. Use of a stainless clad steel for heat exchangers, chemical tankers, chemical plants or pressure vessels, **characterized in that** the stainless clad steel comprises a stainless steel having Pitting Index represented by Formula (1) described below of 35 or more as a cladding material, wherein the ratio of Cr concentration (atomic percent)/Fe concentration (atomic percent) in a passivation film portion of the cladding material to Cr concentration (atomic percent)/Fe concentration (atomic percent) in a parent phase portion of the cladding material is 1.20 or more and, in addition, the amount of precipitation of σ (sigma) phase of the surface of the cladding material is 2.0% or less on an area ratio basis,

$$\text{Pitting Index} = (\text{Cr} + 3.3\text{Mo} + 16\text{N}) \quad \cdots \text{Formula (1)}$$

where Cr, Mo, and N indicate the contents (percent by mass) of their respective elements, and the case of no inclusion is specified to be 0.

2. The use of a stainless clad steel according to Claim 1, **characterized in that** the average glossiness indicator Gs(60) calculated by Formula (2) described below of the cladding material is 60 or more, where the specular glossiness at a measurement angle of 60° defined in JIS Z 8741 is measured in a rolling direction ($\text{Gs(60)}_L$), in a direction perpendicular to the rolling direction ($\text{Gs(60)}_C$), and in a direction at an angle of 45 degrees with respect to the rolling direction ($\text{Gs(60)}_D$),

$$\text{Gs(60)} = (\text{Gs(60)}_L + 2 \times \text{Gs(60)}_D + \text{Gs(60)}_C)/4 \quad \cdots \text{Formula (2)}$$

3. The use of a stainless clad steel according to Claim 1 or 2, **characterized in that** the average glossiness indicators $\text{Gs(60)}_L$, $\text{Gs(60)}_C$, $\text{Gs(60)}_D$ and Gs(60) are 60 or more, where the specular glossiness at a measurement angle of 60° defined in JIS Z 8741.

## Patentansprüche

1. Verwendung eines rostfreien plattierten Stahls für Wärmetauscher, Chemikalientanker, Chemiewerke oder Druckbehälter, **dadurch gekennzeichnet, dass** der rostfreie plattierte Stahl einen rostfreien Stahl mit einem Pitting Index, der durch die unten beschriebene Formel (1) repräsentiert ist, von 35 oder mehr als ein Plattiermaterial umfasst, wobei das Verhältnis der Cr-Konzentration (Atomprozent)/Fe-Konzentration (Atomprozent) in einem Passivierungsschichtabschnitt des Plattiermaterials zur Cr-Konzentration (Atomprozent)/Fe-Konzentration (Atomprozent) in einem Ausgangsphasenabschnitt des Plattiermaterials 1,20 oder mehr beträgt, und außerdem die Menge der Ausfällung der σ- (Sigma) Phase der Oberfläche des Plattiermaterials 2,0 % oder weniger auf einer Flächenverhältnisbasis beträgt,

$$\text{Pitting Index} = (\text{Cr} + 3,3\text{Mo} + 16\text{N}) \quad \text{Formel (1)}$$

wobei Cr, Mo und N die Gehalte (Massenprozent) der jeweiligen Elemente anzeigen und der Fall mit keinem Einschluss auf 0 festgelegt ist.

2. Verwendung eines rostfreien plattierten Stahls nach Anspruch 1, **dadurch gekennzeichnet, dass** der durchschnittliche Glanzindikator Gs(60) des Plattiermaterials, der durch die unten beschriebene Formel (2) berechnet wird, 60 oder mehr beträgt, wobei der Spiegelglanz in einem Messwinkel von 60°, definiert in JIS Z 8741, in einer Walzrichtung ($\text{Gs(60)}_L$), in einer Richtung lotrecht zu der Walzrichtung $\text{Gs(60)}_C$) und in einer Richtung in einem Winkel von 45° bezüglich der Walzrichtung ($\text{Gs(60)}_D$) gemessen wird,

$$Gs(60) = (Gs(60)_L + 2 \times Gs(60)_D + Gs(60)_C)/4 \qquad \text{Formel (2)}$$

**3.** Verwendung eines rostfreien plattierten Stahls nach Anspruch 1 oder 2, **dadurch gekennzeichnet, dass** die durchschnittlichen Glanzindikatoren $Gs(60)_L$, $Gs(60)_C$, $Gs(60)_D$ und $GS(60)$ 60 oder mehr betragen, wobei der Spiegelglanz in einem Messwinkel von 60°, definiert in JIS Z 8741.

**Revendications**

**1.** Utilisation d'acier à gainage inoxydable pour échangeurs de chaleur, chimiquiers, usines chimiques ou appareils à pression, **caractérisée en ce que** l'acier à gainage inoxydable comprend un acier inoxydable ayant un indice de piqûration représenté par la formule (1) décrite ci-dessous de 35 ou plus en tant que matériau de gainage, où le rapport de la concentration en Cr (pourcentage atomique)/concentration en Fe (pourcentage atomique) dans une partie de film de passivation du matériau de gainage à la concentration en Cr (pourcentage atomique)/concentration en Fe (pourcentage atomique) dans une partie de phase parente du matériau de gainage est de 1,20 ou plus et, en outre, la quantité de précipitation de phase $\sigma$ (sigma) de la surface du matériau de gainage est de 2,0 % ou moins sur une base de rapport surfacique,

$$\text{Indice de piqûration} = (Cr + 3{,}3Mo + 16N) \qquad \text{Formule (1)}$$

où Cr, Mo et N indiquent les teneurs (pourcentage en masse) de leurs éléments respectifs, et en cas d'absence, est spécifié pour être égal à 0.

**2.** Utilisation d'un acier à gainage inoxydable selon la revendication 1, **caractérisée en ce que** l'indicateur de brillance moyenne $Gs(60)$ calculé par la formule (2) décrite ci-dessous du matériau de gainage est de 60 ou plus, où la brillance spéculaire suivant un angle de mesure de 60° ou plus définie dans la JIS Z 8741 est mesurée dans un sens de laminage ($Gs(60)_L$), dans une direction perpendiculaire au sens de laminage ($Gs(60)_C$) et dans une direction suivant un angle de 45° par rapport au sens de laminage ($Gs(60)_D$),

$$Gs(60) = (Gs(60)_L + 2 \times Gs(60)_D + Gs(60)_C)/4 \qquad \text{Formule (2)}$$

**3.** Utilisation d'un acier à gainage inoxydable selon la revendication 1 ou 2, **caractérisée en ce que** les indicateurs de brillance moyenne $Gs(60)_L$, $Gs(60)_C$, $Gs(60)_D$ et $Gs(60)$ sont de 60 ou plus, la brillance spéculaire suivant un angle de mesure de 60° étant définie dans la JIS Z 8741.

## FIG. 1

MEASUREMENT EXAMPLE OF Cr/Fe RATIO OF
PASSIVE FILM AND STAINLESS STEEL PARENT PHASE

MEASUREMENT CONDITION
NAME OF APPARATUS: PHI MODEL 660 PRODUCED BY PHISICAL ELECTONICS
ACCELERATING VOLTAGE: 5 kV  AMOUNT OF CURRENT OF SAMPLE: 0.2 μA
MEASUREMENT REGION: 5 μm × 5 μm

## FIG. 2

MEASUREMENT CONDITION OF
SURFACE GLOSSINESS

IN CONFORMITY WITH JIS Z 8741 "SPECULAR GLOSSINESS-METHODS OF MEASUREMENT"
MEASUREMENT CONDITION: Gs(60)  AVERAGE OF 5 POINTS

**EP 2 824 206 B1**

**Patent documents cited in the description**

- JP 4179133 B
- JP 3409660 B
- JP 3514889 B
- JP 3401538 B
- JP 2004156126 A

- EP 0596121 A1
- JP H02285025 A
- JP 6418502 A
- JP 2002003938 A
- JP 2008274386 A